# FASCICULE DE BREVET EUROPEEN

(11) **EP 3 140 542 B1**
(45) Date de publication et mention de la délivrance du brevet: **04.08.2021**
(21) Numéro de dépôt: 15721871.0
(22) Date de dépôt: 04.05.2015
(51) Int. Cl.: G01L 19/16, F04B 13/02, F04F 5/10, G01L 19/00

(54) **DISPOSITIF DE SURVEILLANCE DU FONCTIONNEMENT D'UN DOSEUR D'ADDITIF LIQUIDE DANS UN LIQUIDE PRINCIPAL, ET DOSEUR EQUIPE D'UN TEL DISPOSITIF**
VORRICHTUNG ZUR ÜBERWACHUNG DES BETRIEBS EINES DOSISSPENDERS EINES FLÜSSIGEN ADDITIVS IN EINE HAUPTFLÜSSIGKEIT UND MIT SOLCH EINER VORRICHTUNG AUSGESTATTETER DOSISSPENDER
DEVICE FOR MONITORING THE OPERATION OF A DOSAGE DISPENSER OF A LIQUID ADDITIVE IN A MAIN LIQUID, AND DOSAGE DISPENSER PROVIDED WITH SUCH A DEVICE

(30) Priorité: 06.05.2014 FR 1454074
(43) Date de publication de la demande: 15.03.2017
(73) Titulaire: DOSATRON INTERNATIONAL, 33370 Tresses (FR)
(72) Inventeur: LUCAS, Gregory, 33450 Saint-Loubes (FR); HARDOIN, Alexandre, 72250 Parigne-L'Eveque (FR)
(74) Mandataire: IPAZ
(86) Numéro de dépôt international: PCT/IB2015/053242
(87) Numéro de publication internationale: WO 2015/170238

(56) Documents cités:
- FR-A1- 2 798 705
- GB-A- 2 157 368
- JP-A- 2012 087 631
- None

## Description

L'invention est relative à un dispositif de surveillance du fonctionnement d'un doseur d'additif liquide dans un liquide principal qui actionne le doseur selon des phases d'aspiration et de refoulement, lequel doseur comporte un conduit d'aspiration propre à plonger dans l'additif liquide contenu dans un récipient, le dispositif de surveillance comportant des moyens de détection de l'aspiration d'additif liquide et des moyens d'affichage de paramètres de fonctionnement du doseur propres à émettre, à partir de données fournies par les moyens de détection, une information au moins lorsque le niveau d'additif liquide dans le récipient atteint une limite inférieure, et lorsqu'une augmentation intempestive du niveau se produit dans le récipient.

FR 2 798 705 propose un dispositif de surveillance de ce genre comportant, comme moyens de détection de l'aspiration d'additif liquide, deux capteurs de pression placés aux bornes d'un élément de perte de charge disposé dans le conduit d'aspiration.

Un tel élément de perte de charge freine le débit d'aspiration de l'additif pour une différence de pression motrice déterminée. De plus, cet élément de perte de charge augmente les risques d'obturation du conduit d'aspiration. En outre, l'installation de capteurs de pression aux bornes de cet élément complique la fabrication du dispositif de surveillance.

L'invention a pour but, surtout de fournir un dispositif de surveillance du fonctionnement d'un doseur d'additif liquide qui ne présente plus, ou à un degré moindre, les inconvénients évoqués ci-dessus, tout en restant d'une réalisation et d'une mise en œuvre simple et fiable.

Selon l'invention, le dispositif de surveillance du fonctionnement d'un doseur d'additif liquide dans un liquide principal, du genre défini précédemment, est caractérisé en ce que les moyens de détection de l'aspiration d'additif liquide comprennent :
- un tube, distinct du conduit d'aspiration, dont une extrémité est prévue pour plonger dans le récipient d'additif liquide, et dont l'autre extrémité est prévue pour être maintenue fixe relativement au conduit d'aspiration pour se trouver hors du récipient, cette autre extrémité étant fermée et munie d'un capteur de la pression d'air dans le tube, lequel capteur fournit en sortie un signal électrique,
- et des moyens d'exploitation du signal du capteur, reliés à la sortie du capteur, pour fournir les informations sur le fonctionnement.

Le conduit d'aspiration du doseur est libre de tout élément créant une perte de charge et l'installation du capteur de pression à l'extrémité supérieure du tube est relativement simple.

Avantageusement, le dispositif de surveillance comporte un dispositif apte à détecter la pression du liquide dans un tronçon de conduit d'aspiration, et apte à être monté dans la paroi du conduit tout en laissant libre la section de passage du conduit, le dispositif détecteur étant prévu pour être disposé en aval d'un clapet d'aspiration et permettant de compter le nombre de pics de pression et de cycles de pompage, et les moyens d'exploitation comportent des moyens de calcul pour déterminer le volume d'additif pompé d'après le nombre de pics de pression détectés et des moyens de comparaison entre le volume d'additif estimé d'après les moyens d'exploitation du signal du capteur de pression d'air, et celui déterminé d'après les pics de pression détectés.

Les moyens d'exploitation peuvent comporter un microprocesseur programmé pour traiter les diverses informations provenant du capteur de pression d'air et du dispositif détecteur de pression du liquide dans le conduit d'aspiration.

Les moyens d'affichage peuvent comporter des diodes électroluminescentes de couleurs différentes, et/ou un écran d'affichage. Les informations de fonctionnement peuvent être fournies sous forme alphanumérique, et/ou sous forme lumineuse à l'aide de diodes électroluminescentes de couleurs différentes, et/ou sous forme d'un signal sonore.

Le dispositif de surveillance peut comporter un carter avec tronçon de conduit d'aspiration et dispositifs de raccord à un conduit inférieur et à un tronçon de conduit supérieur situé dans un manchon du doseur. Avantageusement, le tube est fixé de manière démontable dans le carter.

Le tube peut être monté parallèle au conduit d'aspiration, ou oblique relativement à ce conduit.

L'invention est également relative à un doseur d'additif liquide dans un liquide principal qui actionne le doseur selon des phases d'aspiration et de refoulement, lequel doseur comporte un conduit d'aspiration propre à plonger dans l'additif liquide contenu dans un récipient, et un dispositif de surveillance du fonctionnement conforme à l'invention, c'est-à-dire, comportant des moyens de détection de l'aspiration d'additif liquide, et des moyens d'affichage de paramètres du fonctionnement du doseur propres à émettre une information au moins lorsque le niveau d'additif liquide dans le récipient atteint une limite inférieure, et lorsqu'une augmentation intempestive du niveau dans le récipient se produit, caractérisé en ce que les moyens de détection de l'aspiration d'additif liquide comprennent :
- un tube, distinct du conduit d'aspiration, dont l'extrémité inférieure est prévue pour plonger dans le récipient d'additif liquide et dont l'extrémité supérieure est maintenue fixe relativement au conduit d'aspiration, pour se trouver hors du récipient, cette extrémité supérieure étant fermée et munie d'un capteur de la pression d'air dans le tube, lequel capteur fournit en sortie un signal électrique,
- et des moyens d'exploitation du signal du capteur, reliés à la sortie du capteur.

La fermeture de l'extrémité supérieure du tube peut être assurée, au moins en partie, par le capteur de pression d'air. En variante, le capteur de pression d'air peut être disposé dans la paroi du tube, à proximité de l'extrémité supérieure

Avantageusement, le doseur comporte un dispositif détecteur de la variation de pression du liquide dans un tronçon du conduit d'aspiration, sensible à la pression dans ce conduit, monté dans la paroi du conduit tout en laissant libre la section de passage du conduit, le dispositif détecteur étant disposé en aval d'un clapet d'aspiration et permettant de compter le nombre de pics de pression et de cycles de pompage.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est une vue en élévation d'un doseur d'additif liquide équipé d'un dispositif de surveillance selon l'invention.
Fig. 2 est une vue en perspective extérieure à plus grande échelle du dispositif de surveillance de Fig.1, le tube n'étant représenté que partiellement.
Fig. 3 est une coupe du dispositif de Fig. 2 par un plan vertical, médiateur du dispositif d'affichage, et passant par l'axe géométrique du tube.
Fig. 4 est une coupe du dispositif de Fig. 2 par un plan vertical, décalé par rapport au plan de Fig.3, passant par l'axe géométrique du conduit d'aspiration, et orthogonal à l'écran d'affichage.
Fig. 5 montre, en perspective extérieure et en élévation, un doseur équipé d'une variante de réalisation du dispositif de surveillance.
Fig. 6 est une vue en élévation à plus grande échelle du dispositif de surveillance de Fig. 5, et
Fig. 7 est une vue de gauche par rapport à Fig. 6.

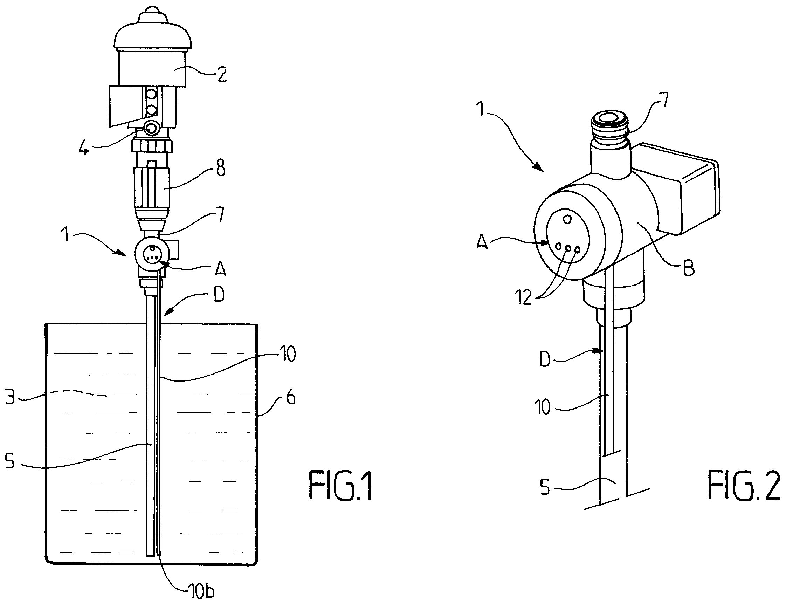

En se reportant à Fig. 1-4 des dessins, on peut voir un premier mode de réalisation d'un dispositif 1 de surveillance du fonctionnement d'un doseur 2 d'additif liquide 3 dans un courant de liquide principal qui s'écoule dans une conduite 4 reliée au doseur 2. La source motrice du doseur est constituée par le courant de liquide principal qui actionne le doseur, lequel fonctionne sans électricité motrice. De tels doseurs sont connus, notamment d'après le brevet EP 0 255 791 B1, ainsi que d'après EP 0 885 357 B1 et WO 2012/046 162.

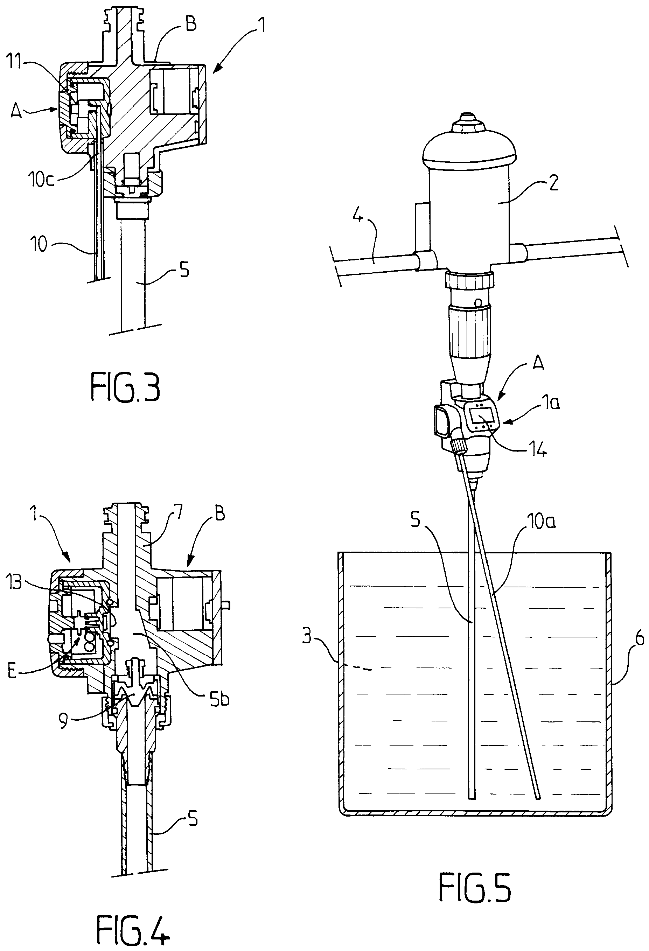

Le doseur 2 comporte un conduit d'aspiration 5 propre à plonger dans un volume d'additif liquide contenu dans un récipient 6. Le conduit 5 est raccordé à un tronçon 5b (Fig.4) de conduit d'aspiration prévu dans le dispositif de surveillance 1. Le carter B du dispositif 1 comporte, à l'opposé du tube 5, une tubulure de raccord 7 propre à être reliée à la partie inférieure d'un manchon cylindrique 8 du doseur 2. Un autre tronçon, non visible, du conduit d'aspiration est prévu dans le manchon 8, et reçoit un piston animé d'un mouvement alternatif pour assurer les phases d'aspiration et de refoulement. Un clapet d'aspiration 9 (Fig.4) est avantageusement disposé en partie basse du tronçon 5b du conduit d'aspiration. Le clapet 9 s'ouvre lors de l'aspiration et se referme lors du refoulement de la dose prélevée d'additif liquide dans le courant de liquide principal.

Des moyens D de détection de l'aspiration comprennent un tube 10 distinct du conduit d'aspiration 5, dont l'extrémité inférieure 10b est prévue pour plonger dans le récipient 6 d'additif liquide. L'autre extrémité supérieure 10c du tube est fermée et munie d'un capteur 11 de la pression d'air dans le tube 10.

L'extrémité supérieure 10c est fixée dans le carter B du dispositif 1, en particulier par emboîtement serré dans un alésage de ce carter, de préférence selon un assemblage permettant le démontage et le remplacement du tube 10.

Le capteur 11 fournit en sortie un signal électrique. Des moyens d'exploitation E du signal sont reliés à la sortie du capteur. Les moyens d'exploitation E comprennent avantageusement un microprocesseur programmé pour fournir, à partir de données provenant du capteur 11, une information de fonctionnement qui apparaît sur des moyens d'affichage A comprenant, selon l'exemple de réalisation de Fig.2, plusieurs diodes électroluminescentes 12 de couleurs différentes, notamment verte, jaune et rouge, pour indiquer selon la diode qui est allumée que le fonctionnement est correct (diode verte allumée) ou est moyennement satisfaisant (diode jaune allumée) ou est défectueux (diode rouge allumée).

En particulier, une information d'alerte, avec diode rouge allumée, est fournie lorsque le niveau d'additif liquide dans le récipient 6 atteint une limite inférieure correspondant au récipient pratiquement vide, ou lorsqu'une augmentation intempestive du niveau de liquide dans le récipient 6 se produit. Une telle augmentation du niveau peut provenir, notamment, d'une fuite de liquide principal vers le récipient 6.

Avantageusement, sur le tronçon 5b du conduit d'aspiration, dans le carter B du dispositif 1, un dispositif 13 détecteur de la pression du liquide est monté dans la paroi du tronçon, en laissant libre la section de passage. Le dispositif 13 détecteur est installé en aval du clapet d'aspiration 9, au-dessus de ce clapet selon Fig.4. Le terme « aval » est à comprendre suivant le sens d'écoulement de l'additif liquide lorsqu'il est aspiré. Le dispositif 13 détecteur est relié aux moyens d'exploitation E et permet de compter les pics de pression et les cycles de pompage correspondant à des phases de refoulement du doseur, pour lesquelles le clapet 9 est fermé.

WO 2012/046 162 prévoit un dispositif détecteur de ce type.

Les moyens d'exploitation E comprennent notamment un microprocesseur et sont avantageusement programmés comme moyens de calcul pour déterminer le volume d'additif pompé d'après le nombre de cycles du doseur détectés par le dispositif 13.

De préférence, les moyens d'exploitation E comprennent des moyens de comparaison entre le volume d'additif pompé déterminé d'après l'information fournie par le dispositif détecteur 13, et le volume d'additif pompé déduit de la variation de pression dans le tube 10, fournie par le capteur 11.

Plus précisément, la variation de pression mesurée par le capteur 11 correspond à une variation de hauteur de l'additif dans le récipient 6, ce qui permet de déduire le volume de liquide aspiré pour un récipient de section connue. Ce volume est comparé à celui obtenu en multipliant le nombre de pics de pression, dans le tronçon 5b, par la cylindrée d'une aspiration de liquide additif. En multipliant le nombre de pics de pression par la cylindrée du doseur pour le liquide principal, les moyens d'exploitation E déterminent le volume total de liquide traversant le doseur dans un temps donné. En effectuant le rapport du volume d'additif pompé audit volume total, les moyens d'exploitation E permettent de déterminer le dosage d'additif dans le liquide principal.

En se reportant aux Fig. 5-7, on peut voir une variante de réalisation 1a du dispositif de surveillance selon l'invention. Les éléments identiques ou similaires à des éléments déjà décrits à propos des figures précédentes sont désignés par les mêmes références numériques éventuellement suivies de la lettre « a », sans que leur description soit reprise en détail.

Le tube 10a, distinct du conduit d'aspiration 5, au lieu d'être vertical et parallèle au conduit 5 comme dans le cas de Fig. 1, présente une certaine inclinaison, notamment de l'ordre de 20°, par rapport à la verticale. Les moyens d'affichage A sont constitués par un écran 14, de préférence à cristaux liquides, sur lequel les moyens d'exploitation E permettent d'afficher des messages alphanumériques.

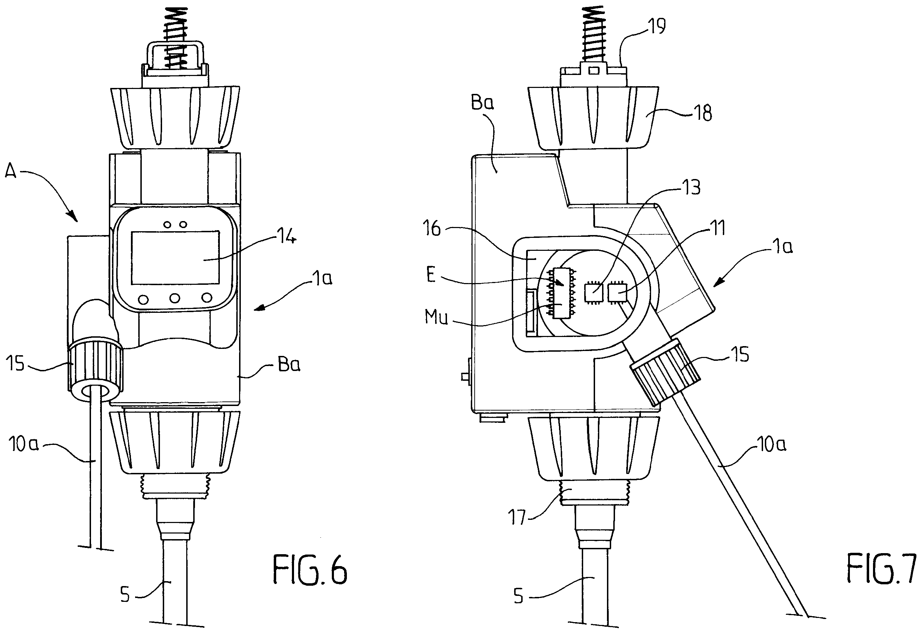

Le tube 10a est maintenu, dans sa partie supérieure, par un dispositif de serrage 15 à écrou et mandrin de serrage (non visible) autour du tube 10a. L'extrémité supérieure du tube débouche dans une cavité 16 (Fig.7) du carter Ba où est disposé un microprocesseur Mu faisant partie des moyens d'exploitation E. Le microprocesseur Mu est connecté au capteur de pression 11 ainsi qu'à l'écran 14. En fonctionnement normal, la cavité 16 est fermée par un couvercle. L'alimentation électrique des composants électroniques du dispositif de surveillance est assurée par une pile ou batterie électrique logée dans le carter Ba, ou B dans le cas de Fig.1-4.

Le dispositif détecteur de pression 13 dans la conduite d'aspiration est également disposé dans la cavité 16 et connecté au microprocesseur Mu.

Le carter Ba comporte en partie basse un raccord 17 pour la liaison au conduit 5. Dans le prolongement du raccord 17 est prévu, en partie supérieure sur le carter Ba, un dispositif de raccord 18 pour liaison avec l'extrémité inférieure du manchon 8 du doseur. Un clapet 19 est prévu à l'extrémité supérieure du raccord 18.

Quel que soit le mode de réalisation, le dispositif de surveillance du fonctionnement du doseur selon l'invention permet, à partir de la pression d'air mesurée dans le tube 10, 10a de détecter des situations de défaut telles que :
- un refoulement de l'additif et éventuellement du liquide principal 4, dans le récipient 6, pendant et hors fonctionnement du doseur, par détection d'un niveau de liquide supérieur à une limite déterminée ;
- un niveau de liquide, dans le récipient 6, inférieur à une limite basse déterminée;
- un sous-dosage.

La combinaison du capteur de pression d'air 11 et du détecteur 13, de pression du liquide dans le conduit d'aspiration, et le traitement par les moyens d'exploitation E des informations obtenues permettent d'estimer précisément le débit et d'effectuer une estimation de dosage fiable. Les incidents de fonctionnement sont rapidement signalés.

Avec un récipient 6 de section calibrée, le suivi du niveau de liquide dans ce récipient, grâce au capteur de pression 11, permet de disposer d'un véritable débitmètre à l'aspiration.

## Revendications

1. Dispositif de surveillance du fonctionnement d'un doseur d'additif liquide dans un liquide principal qui actionne le doseur selon des phases d'aspiration et de refoulement, lequel doseur comporte un conduit d'aspiration (5) propre à plonger dans l'additif liquide contenu dans un récipient, le dispositif de surveillance comportant des moyens de détection (D) de l'aspiration d'additif liquide et des moyens d'affichage (A) de paramètres de fonctionnement du doseur propres à émettre, à partir de données fournies par les moyens de détection, une information au moins lorsque le niveau d'additif liquide dans le récipient atteint une limite inférieure, et lorsqu'une augmentation intempestive du niveau se produit dans le récipient, **caractérisé en ce que** les moyens de détection de l'aspiration d'additif liquide comprennent :
- un tube (10, 10a), distinct du conduit d'aspiration (5), dont une extrémité (10b) est prévue pour plonger dans le récipient (6) d'additif liquide, et dont l'autre extrémité (10c) est prévue pour être maintenue fixe relativement au conduit d'aspiration pour se trouver hors du récipient, cette autre extrémité (10c) étant fermée et munie d'un capteur (11) de la pression d'air dans le tube (10, 10a), lequel capteur fournit en sortie un signal électrique,
- et des moyens d'exploitation (E) du signal du capteur (11), reliés à la sortie du capteur, pour fournir les informations sur le fonctionnement.

2. Dispositif selon la revendication 1, **caractérisé en ce qu'**il comporte un dispositif (13) apte à détecter la pression du liquide dans un tronçon de conduit d'aspiration, et apte à être monté dans la paroi du conduit tout en laissant libre la section de passage du conduit, le dispositif détecteur étant prévu pour être disposé en aval d'un clapet d'aspiration (9) et permettant de compter les pics de pression et les cycles de pompage,
- et **en ce que** les moyens d'exploitation (E) comporte des moyens de calcul pour déterminer le volume d'additif pompé d'après le nombre de pics de pression détectés et des moyens de comparaison entre le volume d'additif estimé d'après les moyens d'exploitation du signal du capteur de pression d'air, et celui déterminé d'après les pics de pression détectés.

3. Dispositif selon la revendication 2, **caractérisé en ce que** les moyens d'exploitation (E) comportent un microprocesseur (Mu) programmé pour traiter les diverses informations provenant du capteur de pression d'air (11) et du dispositif (13) détecteur de pression du liquide dans le conduit d'aspiration.

4. Dispositif selon l'une quelconque des revendications précédentes, **caractérisé en ce que** les moyens d'affichage (A) comportent des diodes électroluminescentes (12) de couleurs différentes.

5. Dispositif selon l'une quelconque des revendications précédentes, **caractérisé en ce que** les moyens d'affichage (A) comportent un écran d'affichage (14) sur lequel des informations de fonctionnement sont fournies sous forme alphanumérique.

6. Dispositif selon l'une quelconque des revendications précédentes, **caractérisé en ce qu'**il comporte un carter (B, Ba) avec tronçon de conduit d'aspiration (5b) et dispositifs de raccord au conduit inférieur (5) et à un tronçon de conduit supérieur situé dans un manchon (8) du doseur (2).

7. Dispositif selon la revendication 6, **caractérisé en ce que** le tube (10, 10a) est fixé de manière démontable dans le carter (B, Ba).

8. Dispositif selon l'une quelconque des revendications précédentes, **caractérisé en ce que** le tube (10) est prévu pour être monté parallèle au conduit d'aspiration (5)

9. Dispositif selon l'une quelconque des revendications 1 à 7, **caractérisé en ce que** le tube (10a) est prévu pour être monté oblique relativement au conduit d'aspiration (5).

10. Doseur d'additif liquide dans un liquide principal qui actionne le doseur selon des phases d'aspiration et de refoulement, lequel doseur comporte un conduit d'aspiration (5) propre à plonger dans l'additif liquide contenu dans un récipient, et un dispositif de surveillance (1 ,1a) du fonctionnement conforme à la revendication 1.

11. Doseur selon la revendication 10, **caractérisé en ce que** la fermeture de l'extrémité supérieure (10c) du tube est assurée, au moins en partie, par le capteur (11) de pression d'air.

12. Doseur selon la revendication 10 ou 11, **caractérisé en ce qu'**il comporte un dispositif (13) détecteur de la variation de pression du liquide dans un tronçon (5b) du conduit d'aspiration, sensible à la pression dans ce conduit, monté dans la paroi du conduit tout en laissant libre la section de passage du conduit, le dispositif détecteur (13) étant disposé en aval d'un clapet d'aspiration (9) et permettant de compter le nombre de pics de pression et de cycles de pompage.

## Patentansprüche

1. Vorrichtung zur Überwachung der Funktion eines Dosierers für ein flüssiges Additiv in eine Hauptflüssigkeit, die den Dosierer gemäß den Phasen des Ansaugens und Ausstoßens betätigt, wobei der Dosierer eine Saugleitung (5) umfasst, die geeignet ist, in das in einem Behälter enthaltene flüssige Additiv einzutauchen, wobei die Überwachungsvorrichtung Einrichtungen zum Nachweis (D) des Ansaugens des flüssigen Additivs und Einrichtungen zum Anzeigen (A) von Funktionsparametern des Dosierers umfasst, die geeignet sind, ausgehend von durch die Nachweiseinrichtungen gelieferten Daten eine Information wenigstens dann auszusenden, wenn der Pegel des flüssigen Additivs in dem Behälter eine Untergrenze erreicht und wenn eine unbeabsichtigte Erhöhung des Pegels in dem Behälter erfolgt, **dadurch gekennzeichnet, dass** die Einrichtungen zum Nachweis des Ansaugens des flüssigen Additivs Folgendes umfassen:
- ein Rohr (10, 10a), das separat von der Saugleitung (5) vorliegt, wobei vorgesehen ist, dass sein eines Ende (10b) in den Behälter (6) des flüssigen Additivs eintaucht, und vorgesehen ist, dass sein anderes Ende (10c) relativ zu der Saugleitung so festgehalten wird, dass es sich außerhalb des Behälters befindet, wobei dieses andere Ende (10c) geschlossen und mit einem Sensor (11) für den Luftdruck in dem Rohr (10, 10a) ausgestattet ist, wobei der Sensor an seinem Ausgang ein elektrisches Signal liefert;
- und Einrichtungen zur Verwertung (E) des Signals des Sensors (11), die mit dem Ausgang des Sensors verbunden sind, um Informationen über die Funktion zu liefern.

2. Vorrichtung gemäß Anspruch 1, **dadurch gekennzeichnet, dass** sie eine Vorrichtung (13) umfasst, die den Druck der Flüssigkeit in einem Abschnitt der Saugleitung nachweisen kann und in einer Wand der Leitung montiert werden kann, wobei sie den Durchflussabschnitt der Leitung freilässt, wobei vorgesehen ist, dass sich die Nachweisvorrichtung hinter einem Saugventil (9) befindet und das Zählen der Druckmaxima und der Pumpzyklen ermöglicht;
- und dadurch, dass die Verwertungseinrichtungen (E) Recheneinrichtungen umfassen, um das Pumpvolumen des Additivs anhand der Anzahl der nachgewiesenen Druckmaxima zu bestimmen, und Einrichtungen zum Vergleich zwischen dem anhand der Einrichtungen zur Verwertung des Signals des Luftdrucksensors geschätzten und dem anhand der nachgewiesenen Druckmaxima bestimmten Volumen des Additivs.

3. Vorrichtung gemäß Anspruch 2, **dadurch gekennzeichnet, dass** die Verwertungseinrichtungen (E) einen Mikroprozessor (Mu) umfassen, der so programmiert ist, dass er die verschiedenen Informationen verarbeitet, die vom Luftdrucksensor (11) und von der Vorrichtung (13) zum Nachweis des Drucks der Flüssigkeit in der Saugleitung stammen.

4. Vorrichtung gemäß einem der vorstehenden Ansprüche, **dadurch gekennzeichnet, dass** die Anzeigeeinrichtungen (A) Leuchtdioden (12) unterschiedlicher Farben umfassen.

5. Vorrichtung gemäß einem der vorstehenden Ansprüche, **dadurch gekennzeichnet, dass** die Anzeigeeinrichtungen (A) einen Bildschirm (14) umfassen, auf dem Informationen zur Funktion in alphanumerischer Form geliefert werden.

6. Vorrichtung gemäß einem der vorstehenden Ansprüche, **dadurch gekennzeichnet, dass** sie ein Gehäuse (B, Ba) mit einem Saugleitungsabschnitt (5b) und Vorrichtungen zum Anschluss an die untere Leitung und an einen oberen Leitungsabschnitt, der sich in einer Hülse (8) des Dosierers (2) befindet, umfasst.

7. Vorrichtung gemäß Anspruch 6, **dadurch gekennzeichnet, dass** das Rohr (10, 10a) lösbar in dem Gehäuse (B, Ba) befestigt ist.

8. Vorrichtung gemäß einem der vorstehenden Ansprüche, **dadurch gekennzeichnet, dass** vorgesehen ist, das Rohr (10) parallel zur Saugleitung (5) zu montieren.

9. Vorrichtung gemäß einem der Ansprüche 1 bis 7, **dadurch gekennzeichnet, dass** vorgesehen ist, das Rohr (10) schief relativ zur Saugleitung (5) zu montieren.

10. Dosierer für ein flüssiges Additiv in einer Hauptflüssigkeit, die den Dosierer gemäß den Phasen des Ansaugens und Ausstoßens betätigt, wobei der Dosierer eine Saugleitung (5), die geeignet ist, in das in einem Behälter enthaltene flüssige Additiv einzutauchen, und eine Vorrichtung (1, 1a) zur Funktionsüberwachung gemäß Anspruch 1 umfasst.

11. Dosierer gemäß Anspruch 10, **dadurch gekennzeichnet, dass** der Verschluss des oberen Endes (10c) des Rohrs wenigstens teilweise durch den Luftdrucksensor (11) gesichert ist.

12. Dosierer gemäß Anspruch 10 oder 11, **dadurch gekennzeichnet, dass** er eine Vorrichtung (13) zum Nachweis der Variation des Drucks der Flüssigkeit in einem Abschnitt (5b) der Saugleitung umfasst, die empfindlich für den Druck in dieser Leitung ist und in der Wand der Leitung montiert ist, wobei sie den Durchflussabschnitt der Leitung freilässt, wobei sich die Nachweisvorrichtung (13) hinter einem Saugventil (9) befindet und das Zählen von Druckmaxima und von Pumpzyklen ermöglicht.

## Claims

1. A device for monitoring the operation of a dosage dispenser of a liquid additive in a main liquid which actuates the dosage dispenser according to suction and delivery stages, which dosage dispenser includes a suction pipe (5) suitable for plunging into the liquid additive contained in a container, the monitoring device including means (D) for detecting the suction of liquid additive and means (A) for displaying operating parameters of the dosage dispenser which are suitable for transmitting, using data provided by the detecting means, a piece of information at least when the level of liquid additive in the container reaches a lower limit, and when an untimely increase in the level occurs in the container, **characterized in that** the means for detecting the suction of liquid additive comprise:
- a tube (10, 10a), separate from the suction pipe (5), one end (10b) of which is provided for plunging into the container (6) of liquid additive, and the other end (10c) of which is designed to be held fixed relative to the suction pipe in order to be located outside the container, this other end (10c) being closed and provided with a sensor (11) for the air pressure in the tube (10, 10a), which sensor outputs an electrical signal,
- and means (E) for utilizing the signal from the sensor (11), which means are connected to the output of the sensor, in order to provide the operational information.

2. The device as claimed in Claim 1, **characterized in that** it includes a detector device (13) able to detect the pressure of the liquid in a suction pipe segment, and intended to be mounted in the wall of the pipe while leaving the passage section of the pipe free, the detector device being intended to be arranged downstream of a suction valve (9) and allowing the pressure peaks and the pumping cycles to be counted,
- and **in that** the utilization means (E) include calculating means for determining the pumped additive volume from the number of pressure peaks detected and means for comparison between the additive value estimated from the means of utilizing the signal from the air pressure sensor, and that determined from the pressure peaks detected.

3. The device as claimed in Claim 2, **characterized in that** the utilization means (E) include a microprocessor (Mu) programmed to process the various information coming from the air pressure sensor (11) and from the detector device (13) for pressure of the liquid in the suction pipe.

4. The device as claimed in any one of the preceding claims, **characterized in that** the display means (A) include light-emitting diodes (12) of different colors.

5. The device as claimed in any one of the preceding claims, **characterized in that** the display means (A) include a display screen (14) on which operating information is provided in alphanumerical form.

6. The device as claimed in any one of the preceding claims, **characterized in that** it includes a housing (B, Ba) with a suction pipe segment (5b) and devices for connection to the lower pipe (5) and to an upper pipe segment located in a sleeve (8) of the dosage dispenser (2).

7. The device as claimed in Claim 6, **characterized in that** the tube (10, 10a) is removably fixed in the housing (B, Ba).

8. The device as claimed in any one of the preceding claims, **characterized in that** the tube (10) is intended to be mounted parallel to the suction pipe (5).

9. The device as claimed in any one of claims 1-7, **characterized in that** the tube (10a) is intended to be mounted oblique relative to the suction pipe (5).

10. A dosage dispenser of a liquid additive in a main liquid which actuates the dosage dispenser according to suction and delivery stages, which dosage dispenser includes a suction pipe (5) suitable for plunging into the liquid additive contained in a container, and an operation monitoring device (1, 1a) according to claim 1.

11. The dosage dispenser as claimed in Claim 10, **characterized in that** the upper end (10c) of the tube is closed, at least in part, by the air pressure sensor (11).

12. The dosage dispenser as claimed in Claim 10 or 11, **characterized in that** it includes a detector device (13) for the pressure variation of the liquid in a segment (5b) of the suction pipe, which is sensitive to the pressure in this pipe, and mounted in the wall of the pipe while leaving the passage section of the pipe free, the detector device (13) being arranged downstream of a suction valve (9) and allowing the number of pressure peaks and pumping cycles to be counted.
